# EUROPEAN PATENT APPLICATION

(11) **EP 4 170 453 A1**
(43) Date of publication of application: **26.04.2023**
(21) Application number: 22202744.3
(22) Date of filing: 20.10.2022
(51) Int. Cl.: G05D 1/02

(54) **A PROCESSING APPARATUS, A MOBILE ROBOT, A MOVEMENT CONTROL SYSTEM, A PROCESSING METHOD, AND A PROGRAM**

(30) Priority: 22.10.2021 JP 2021173482
(71) Applicant: KABUSHIKI KAISHA TOSHIBA, Minato-ku Tokyo 105-0023 (JP)
(72) Inventor: ITO, Yusuke, Minato-ku, Tokyo, 105-0023 (JP)
(74) Representative: Hoffmann Eitle

(57) **Abstract**

A processing device includes a path generator and a movement controller. The path generator, by using map information enabling a planned movement path of a first mobile robot to be set, sets a first scheduled occupancy space required when the first mobile robot moves in one area of the map information along a planned movement path of the mobile robot. The movement controller performs control such that the first mobile robot moves on the basis of the planned movement path of the first mobile robot. The path generator includes information of a scheduled occupancy space required when a second mobile robot moves in conditions for setting the planned movement path of the first mobile robot.

## Description

### FIELD

Embodiments described herein relate to a processing device, a mobile robot, a movement control system, a processing method, and a program.

### BACKGROUND

A processing device controlling movement of a mobile robot that autonomously moves detects obstacles and the like present in the vicinity of the mobile robot and, in a case in which there is an obstacle or the like in the vicinity thereof, adjusts an amount of movement of the mobile robot. There are cases in which the processing device limits the amount of movement more than necessary for avoiding a collision during the movement of the mobile robot.

### BRIEF DESCRIPTION OF THE DRAWINGS

FIG. 1A is a schematic view illustrating one example of a place to which a movement control system according to a first embodiment is applied.
FIG. 1B is a schematic view illustrating one example of a place to which a movement control system according to the first embodiment is applied.
FIG. 2 is a plan view of a mobile robot according to the first embodiment.
FIG. 3 is a side view of a mobile robot according to the first embodiment.
FIG. 4 is a configuration diagram of a movement control system according to the first embodiment.
FIG. 5A is a diagram illustrating data stored in a storage device according to the first embodiment.
FIG. 5B is a diagram illustrating traveling information according to the first embodiment.
FIG. 5C is a diagram illustrating setting of a scheduled occupancy space using outline information according to an embodiment.
FIG. 6 is a flowchart of a process relating to movement control of a mobile robot according to an embodiment.
FIG. 7 is a diagram illustrating adjustment of a scheduled occupancy space using communication between mobile robots according to an embodiment.
FIG. 8A is a diagram illustrating adjustment of a scheduled occupancy space using communication between mobile robots according to an embodiment.
FIG. 8B is a diagram illustrating adjustment of a scheduled occupancy space using communication between mobile robots according to an embodiment.
FIG. 9A is a diagram illustrating a case in which an obstacle present inside a passage is avoided according to an embodiment.
FIG. 9B is a diagram illustrating a case in which an obstacle present inside a passage is avoided according to an embodiment.
FIG. 9C is a diagram illustrating a case in which an obstacle present inside a passage is avoided according to an embodiment.
FIG. 10 is a configuration diagram of a movement control system according to a second embodiment.
FIG. 11 is a diagram illustrating adjustment of a scheduled occupancy space using communication according to the second embodiment.
FIG. 12 is a diagram illustrating an example of a hardware configuration of a controller according to an embodiment.
FIG. 13 is a configuration diagram of a movement control system according to a third embodiment.

### DETAILED DESCRIPTION

Various Embodiments will be described hereinafter with reference to the accompanying drawings.

Hereinafter, a processing device, a mobile robot, a movement control system, and a processing method, and a program according to embodiments will be described with reference to the drawings.

A processing device includes a path generator and a movement controller. The path generator, by using map information enabling a planned movement path of a first mobile robot to be set, sets a first scheduled occupancy space required when the first mobile robot moves in one area of the map information along a planned movement path of the mobile robot. The movement controller performs control such that the first mobile robot moves on the basis of the planned movement path of the first mobile robot. The path generator includes information of a scheduled occupancy space required when a second mobile robot moves in conditions for setting the planned movement path of the first mobile robot.

In the following description, the same reference numerals will be assigned to components having the same function or similar functions. Duplicate description of such components may be omitted. "Based on XX" stated in this specification means "at least based on XX" and also includes the case of being based on other elements in addition to XX. In addition, "based on XX" is not limited to the case of directly using XX and also includes the case of being based on an arithmetic operation or processing performed for XX. Here, "XX" is an arbitrary element (for example, arbitrary information). Mobile robots 100 and 300 according to embodiments are examples of a mobile robot.

First, a +X direction, a -X direction, a +Y direction, a -Y direction, a +Z direction, and a -Z direction will be defined. The +X direction, the -X direction, the +Y direction, and the -Y direction are directions along a floor face on which a mobile robot moves. The +X direction, for example, is one movement direction of the mobile robot 100 and may be referred to as "forward direction". The -X direction is a direction opposite to the +X direction and may be referred to as a "backward direction". In a case in which the +X direction and the -X direction do not need to be differentiated from each other, "X direction" will simply be referred to. The +Y direction and the -Y direction are directions intersecting with (for example, approximately orthogonal to) the X direction and may be referred to as a vehicle width direction of a vehicle main body 10 or "lateral direction". The +Y direction and the -Y direction are directions opposite to each other. In a case in which the +Y direction and the -Y direction do not need to be differentiated from each other, "Y direction" will simply be referred to. The +Z direction and the -Z direction are directions intersecting with (for example, approximately orthogonal to) the X direction and the Y direction and, for example, are perpendicular directions. The +Z direction is a direction toward an upper side. The -Z direction is a direction opposite to the +Z direction. In a case in which the +Z direction and the -Z direction do not need to be differentiated from each other, "Z direction" will simply be referred to. For the convenience of description, terms such as "forward direction", "backward direction" "lateral direction", "vehicle width direction", and the like described here are represented from a viewpoint with reference to one movement direction of the mobile robot 100. However, the movement direction of the mobile robot 100 is not limited to the +X direction. The mobile robot 100 may be able to move in the -X direction, +Y direction, and the -Y direction. The mobile robot 100 may rotate around an axis in the Z direction in addition to the translational movements described above.

### (First embodiment)

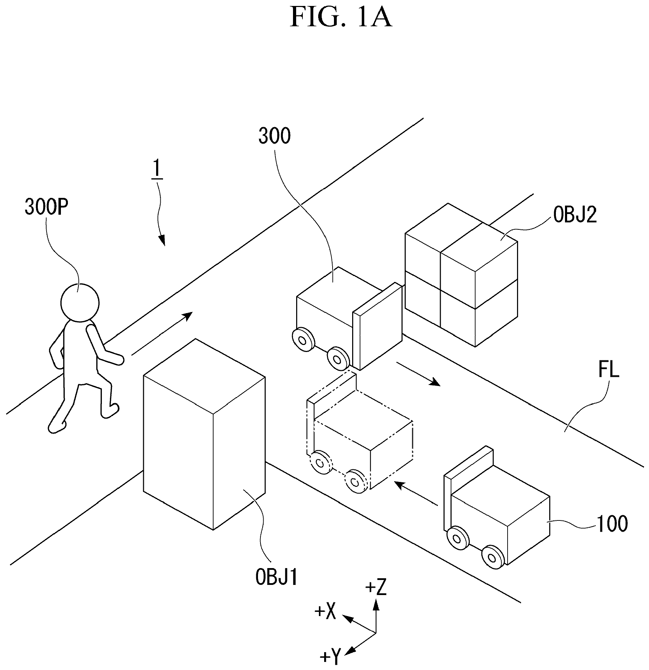

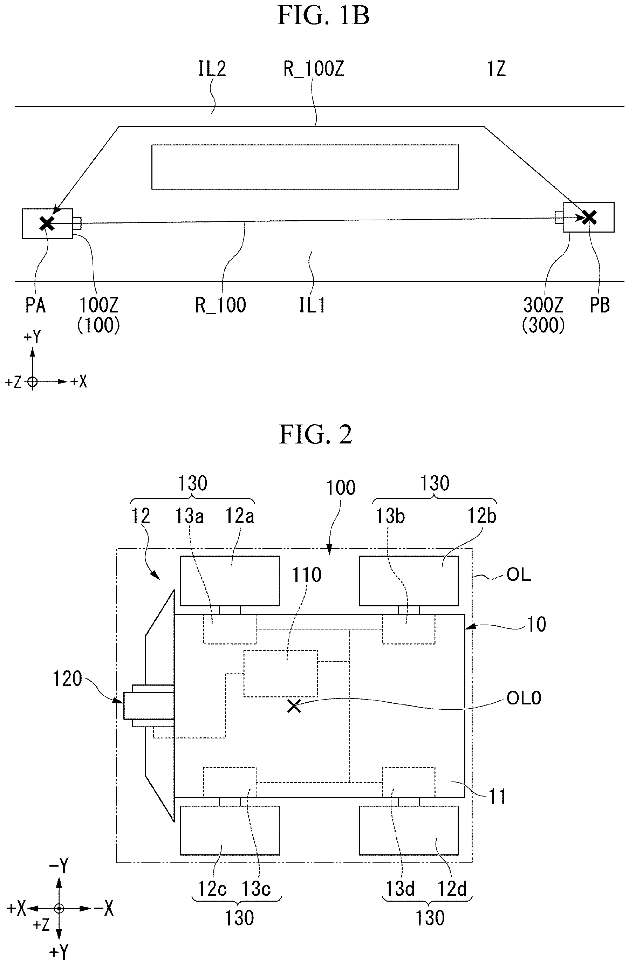

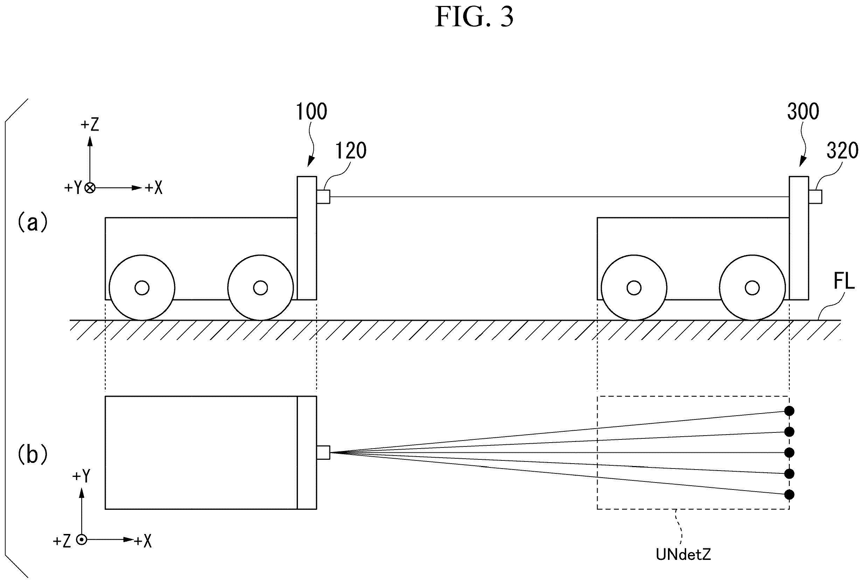

FIGS. 1A and 1B are schematic views illustrating one example of a place to which a movement control system 1 according to a first embodiment is applied. FIG. 2 is a plan view of the mobile robot 100 according to the first embodiment. FIG. 3 is a side view of the mobile robot 100 according to the first embodiment.

The movement control system 1 according to the embodiment includes a part or the whole of the mobile robot 100. The mobile robot 100 may be one example of the movement control system 1. The movement control system 1 may be formed as a part of the mobile robot 100.

The mobile robot 100, for example, is a vehicle of an autonomous movement type that is not required to be operated by an operator and is formed to be able to move on a plane FL independently. For example, the mobile robot 100 is an automatic guided vehicle (AGV) of a lower floor type.

In the application place illustrated in FIG. 1A, an environment in which a plurality of mobile robots such as mobile robots 100 and 300 and humanoid robots such as a mobile robot 300P and the like cooperate with each other is included. Such an application place may be an indoor place such as a factory, a warehouse or an office or an outdoor place. Hereinafter, a case in which the application place is an indoor place will be described as an example.

OBJ 1 and OBJ2 that are present in a range illustrated in FIG. 1A are examples of objects disposed in the environment or other mobile robots (mobile bodies). OBJ 1 and OBJ2 become obstacles when the mobile robot 100 travels. The mobile robot 100 identifies other mobile robots and "the other obstacles" OBJ 1 and OBJ2 and travels in the vicinity thereof by avoiding a contact through autonomous movement control.

Although an application place illustrated in FIG. 1B is the same as the place illustrated in FIG. 1A, the application place is configured such that two methods for joining a point PA and a point PB can be secured. The first passage will be referred to as a passage IL1, and the second passage will be referred to as a passage IL2. Although schematically illustrated in FIG. 1B, a movement cost of a route R_100 passing through the passage IL1 is lower than that of a route R_100Z passing through the passage IL2. In other words, when the route R_100Z passing through the passage IL2 is used, movement efficiency is decreased. In such conditions, when a path is selected for the purpose of efficient movement between the point PA and the point PB, the route R_100 passing through the passage IL1 is selected if there is no problem therewith.

In the example illustrated in this FIG. 1B, the mobile robot 100 is in a stage of moving from the point PA to the point PB, and the mobile robot 300 is in a stage of moving from the point PB to the point PA. The mobile robot 300 is in a situation of passing by the lateral side of the mobile robot 100.

In a movement control system of a comparative example, the number of vehicles that can pass through the passage IL1 is limited to one. In the case of such a comparative example, one vehicle needs to pass through the passage each time. Even in a case where a width of the passage IL1 is relatively large with respect to the size of a mobile robot, and mobile robots can pass by each other in this passage, in the technique of movement control of the comparative example, one vehicle is caused to pass at each time.

In the following embodiments, cases in which such a passage IL1 is efficiently used will be described.

The mobile robot 100 described in the following description may be also configured to be moved by being connected to a vehicle body, which is not illustrated. For simplification of description, a case in which the mobile robot is independently moves will be described as an example. In a case in which the part maintaining the vehicle body is connected as described above, outline information of the mobile robot 100 may be defined on the basis of a shape in the connected state. This will be described below. The mobile robot 100 is not limited to the example described above and may be an unmanned carrier of another type.

The mobile robot 100 illustrated in FIG. 2, for example, includes a vehicle main body 10, a processing device 110, and a sensor 120. The vehicle main body 10 includes a vehicle body casing 11 that is a vehicle body and a movement mechanism 130. The vehicle body casing 11 forms an outer block of the vehicle main body 10. The movement mechanism 130 is a traveling mechanism including four vehicle wheels 12a to 12d that are disposed at four corners of the vehicle main body 10 and motors 13a to 13d respectively driving the vehicle wheels 12a to 12d. The motors 13a to 13d are respectively connected to the vehicle wheels 12a to 12d through vehicle shafts.

The movement mechanism 130, for example, is an omni-directional movement mechanism that moves in all the directions by individually driving the vehicle wheels 12a to 12d to rotate using the motors 13a to 13d. This movement mechanism 130 is formed to move the mobile robot 100 in a real space. The mobile robot 100 can perform translational movement in a desired direction by adjusting a rotation direction and a rotation speed of each vehicle wheel in the movement mechanism 130 and can rotate to change the direction in the space as well.

The movement mechanism 130, for example, may include a steering mechanism and be configured to be able to steer some or all of the vehicle wheels in addition to rotation speeds and rotation directions of the vehicle wheels. Encoders may be mounted in the vehicle shafts respectively connecting the vehicle wheels 12a to 12d and the motors 13a to 13d, and the rotational speed of each of the vehicle wheels 12a to 12d may be able to be continuously measured.

The type of movement mechanism of the mobile robot 100 is any type. For example, in the case of a drive wheel type as illustrated in FIG. 2, the number of vehicle wheels and the number of drive wheels may be arbitrarily set. As a drive type, two-wheel drive, four-wheel drive, or the like may be appropriately selected. Instead of this, the mobile robot 100 may be either a crawler type or a mobile body of a walking type that walks using a plurality of legs. In addition, the mobile robot 100 may a flying object that flies inside a passage of which a width is limited to a predetermined value. In the following description, as a typical example, a vehicle of four-wheel type illustrated in FIG. 2 will be described.

A dashed line surrounding the mobile robot 100 represents a range that is defined as outline information of the mobile robot 100. The outline information OL is defined with reference to a reference position OL0.

The sensor 120 detects objects present in the vicinity of the mobile robot 100.

For example, the sensor 120 may be placed at a position at which a traveling direction of the mobile robot 100 is able to be detected on a front side thereof in the traveling direction thereof. However, the placement position of the sensor 120 is not limited to the front side of the mobile robot 100 and it may be placed on a rear side or a left/right side face.

For example, as illustrated in FIG. 3, the sensor 120, for example, is a three-dimensional distance sensor such as a laser range finger (LRF) that can emit a laser in a predetermined angle range with reference to the traveling direction (the +X direction) of the mobile robot 100. The sensor 120 emits a laser along a virtual plane and generates a result of scanning within the virtual plane as point group information. For example, the virtual plane is a plane formed in a case in which a scanning beam of a laser is caused to scan in a direction horizontal to a ground surface.

The sensor 120 generates detection distance information that is information about a position of a detection target object on a side in front (the + X direction) of the mobile robot 100. The detection distance information is a result of measurement of reflected light or scattered light from a laser or the like in a case in which a laser is projected to a detection target object, but there is no limitation thereto. In addition, as the sensor 120, other optical sensors, an ultrasonic wave sensor, and the like may be used. This will be described below.

The sensor 120 outputs generated detection distance information to a sensor controller 101.

Hereinafter, a laser range finger (LRF) with one-dimensional horizontal scanning will be described as the sensor 120 as an example. Embodiments are not limited thereto and there may be an LRF with two-dimensional scanning.

In addition, depending on a shape of a detection target, the accuracy of a detection result of a position of a detection target may varies.

For example, both the mobile robots 100 and 300 illustrated in (a) of FIG. 3 are in an empty load state in which there is no load on a cargo bed. In such a situation, when the mobile robot 100 detects a position of the mobile robot 300 that is a preceding car, the sensor 120 cannot detect a cargo bed part of the mobile robot 300, and the detected position is not a rear part of the cargo bed of the mobile robot 300 but is a rear part of a guide part disposed in a front part of the cardo bed. For this reason, a range UNdetZ that cannot be observed by the sensor 120 is formed, and a result of detection indicating that the mobile robot is located farther than an actual position is acquired. For this reason, there are cases in which an accurate position of a preceding car cannot be acquired.

The mobile robot 100 according to the embodiment is configured to further increase the accuracy of a result of detection of the position of a preceding vehicle even in a case in which the range UNdetZ that cannot be observed is formed by using the outline information.

The mobile robot 100 may include various sensors for Simultaneous Localization and Mapping (SLAM) and various sensors such as an encoder odometry and the like which are not illustrated. Detailed description thereof will be omitted.

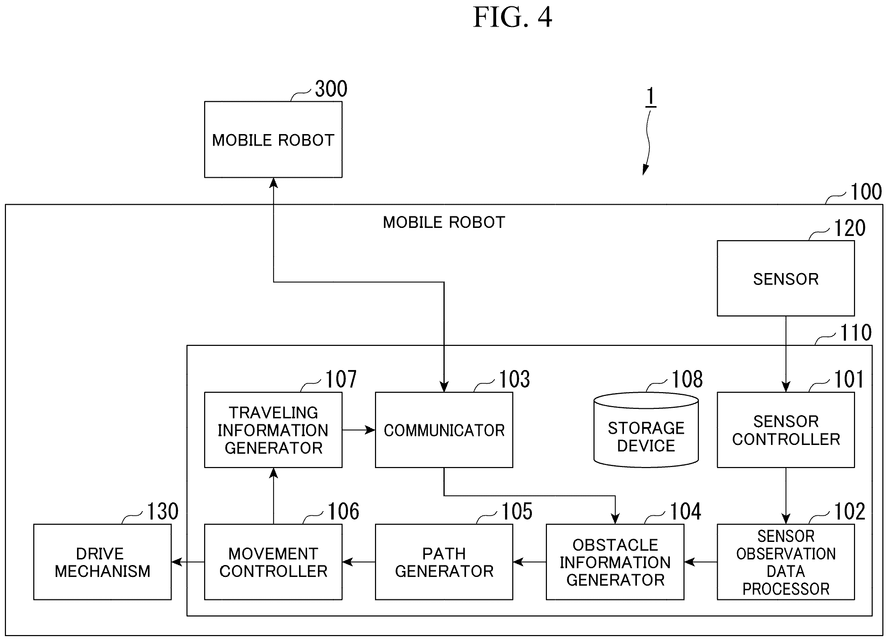

FIG. 4 is a configuration diagram of the movement control system 1 according to the first embodiment.

For example, the movement control system 1 includes a mobile robot 100 and a mobile robot 300. Each of the mobile robot 100 and the mobile robot 300 is an example of a mobile body that can autonomously move.

The mobile robot 100 will be described.

The mobile robot 100 illustrated in FIG. 4, for example, includes a processing device 110, a sensor 120, and a movement mechanism 130.

The processing device 110 will be described.

For example, at least a part of the processing device 110 of the mobile robot 100 is realized by a hardware processor such as a central processing unit (CPU) or a graphics processing unit (GPU) executing a program (software) stored in a storage device. In addition, some or all of functional units of the mobile robot 100 may be realized by hardware (a circuit unit; circuitry) such as a large scale integration (LSI), an application specific integrated circuit (ASIC), or a field-programmable gate array (FPGA) or may be realized by software and hardware in cooperation.

The processing device 110, for example, includes a sensor controller 101, a sensor observation data processor 102, a communicator 103, an obstacle information generator 104, a path generator 105, a movement controller 106, a traveling information generator 107, and a storage device 108.

Arrows connecting the functional units of the processing device 110 represent flows of main data. Transmission/reception of data other than the arrows illustrated in the drawing is not restricted, and transmission/reception of data other than the arrows illustrated in the drawing is allowed.

The storage device 108, for example, is configured to include a semiconductor memory and the like. The storage device 108 is referred to by functional units of the sensor controller 101, the sensor observation data processor 102, the communicator 103, the obstacle information generator 104, the path generator 105, the movement controller 106, and the traveling information generator 107. The storage device 108 stores various kinds of data relating to information generated by each functional unit, a program relating to a process performed by each functional unit, and the like. For example, the storage device 108 stores data relating to map information, traveling information of its own device, traveling information of other devices, detected obstacle information, and the like. Details thereof will be described below.

The sensor controller 101 controls start and end of measurement of surrounding environments of the sensor 120. The sensor controller 101 outputs observation data of the sensor 120.

The sensor observation data processor 102 acquires observation data of the sensor 120, performs signal processing of the observation data, and outputs a result thereof to the obstacle information generator 104. In the signal processing of the observation data, noise reduction for the observation data of the sensor 120 is included. An example of a method for eliminating noise of the observation data of the sensor 120 includes a method of applying a median filter. The sensor observation data processor 102 may perform a process other than the process described above on the observation data of the sensor 120.

The traveling information generator 107 acquires data generated by the obstacle information generator 104, the path generator 105, and the movement controller 106 directly or indirectly through the storage device 108. The traveling information generator 107 generates traveling information of the mobile robot 100 on the basis of the acquired data. The traveling information generator 107 may perform control of the communicator 103 to output traveling information to the outside such as the mobile robot 300.

The communicator 103 transmits traveling information of the mobile robot 100 generated by the traveling information generator 107 to other devices such as the mobile robot 300 and the like and receives traveling information of the mobile robot 300. As a method for communicating with the mobile robot 300 that is used by the communicator 103, a generally-known method may be used.

The obstacle information generator 104 detects one or more obstacles present in the vicinity of the mobile robot 100 from data that has been processed and output by the sensor observation data processor 102 and registers detected obstacles in the storage device 108. In addition, the obstacle information generator 104 calculates a scheduled occupancy space in the traveling environment of the mobile robot 300 from the traveling information of the mobile robot 300 that has been received by the communicator 103 and registers the scheduled occupancy space in the storage device 108 as an obstacle.

### (Overview of mobile robot 300)

The mobile robot 300 will be described.

The mobile robot 300, similar to the mobile robot 100, is a mobile robot belonging to the movement control system 1.

The form of the mobile robot 300 may be the same as or different from that of the mobile robot 100. A type of the movement mechanism of the mobile robot 300 may be the same as or different from that of the mobile robot 100. As the form and the type of movement mechanism of the mobile robot 300, those illustrated in the description of the mobile robot 100 presented above can be applied.

The mobile robot 300 controls self-movement on the basis of the traveling information of the mobile robot 100 that has been acquired through communication with an external device such as the mobile robot 100. As a method for controlling the movement, a method similar to the control of the mobile robot 100 performed at the time of receiving the traveling information of the mobile robot 300 may be applied.

The mobile robot 300 according to the embodiment is in a situation in which the passage IL1 planned as a traveling path of the mobile robot 100 is planned as a traveling path. In the following description, unless otherwise mentioned, the description of the mobile robot 100 can be applied as description of the mobile robot 300.

For example, in description of each mobile robot processing device, the processing device 110 of the mobile robot 100 may be rephrased with a processing device 310 of the mobile robot 300. In addition, the sensor controller 101, the sensor observation data processor 102, the communicator 103, the obstacle information generator 104, the path generator 105, the movement controller 106, the traveling information generator 107, and the storage device 108 of the processing device 110 may be respectively rephrased with a sensor controller 301, a sensor observation data processor 302, a communicator 303, an obstacle information generator 304, a path generator 305, a movement controller 306, a traveling information generator 307, and a storage device 308 of the processing device 310. This similarly applies also to other components.

### (Data stored in storage device 108)

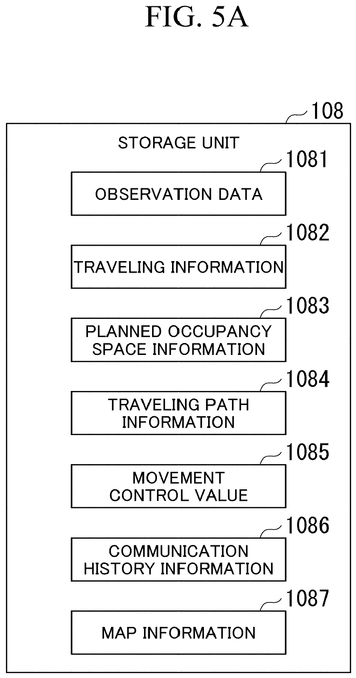

The data stored in the storage device 108 according to the first embodiment will be described with reference to FIGS. 5A to 5C.

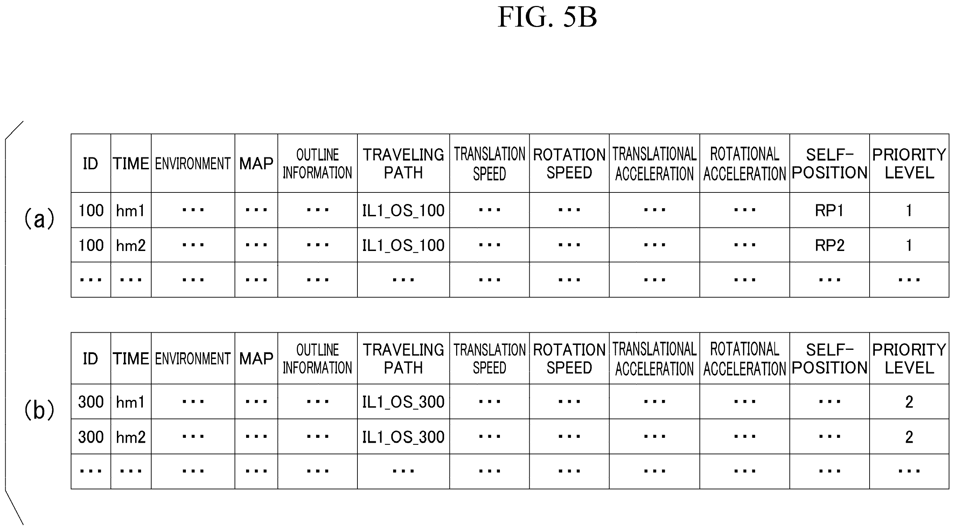

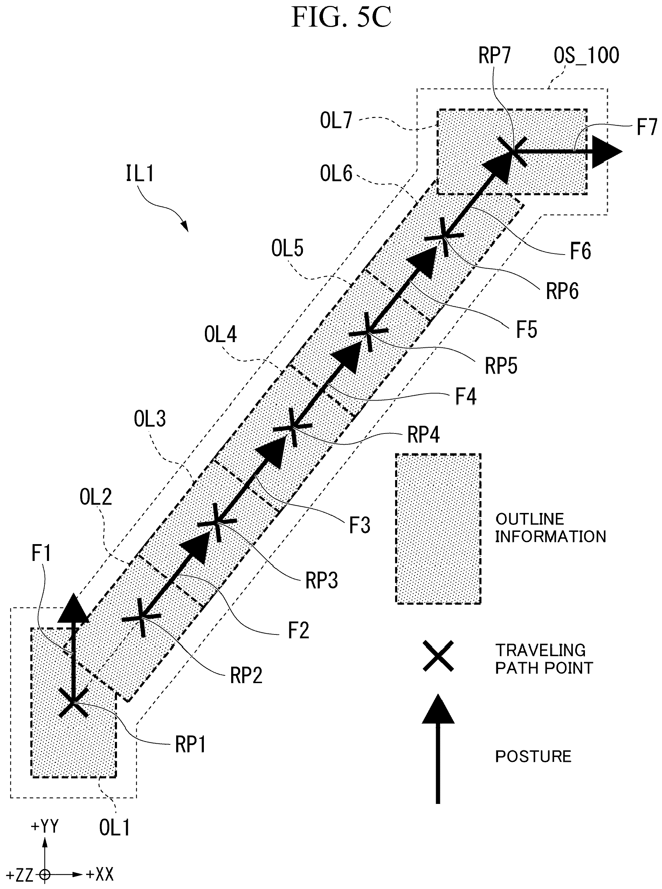

FIG. 5A is a diagram illustrating the data stored in the storage device 108 according to the first embodiment. FIG. 5B is a diagram illustrating traveling information 1082 according to the embodiment. FIG. 5C is a diagram illustrating scheduled occupancy space information 1083 according to the embodiment.

The storage device 108, for example, stores various kinds of data such as observation data 1081, traveling information 1082, scheduled occupancy space information 1083, traveling path information 1084, a movement control value 1085, communication history information 1086, and map information 1087.

In the observation data 1081, data of distances to objects detected in each direction with reference to the direction of the +X axis is stored. This data includes both data detected by the sensor 120 and data for which a noise reduction process has been performed.

An example of the traveling information 1082 is illustrated in FIG. 5B. The traveling information 1082 is an example of movement information. (a) represented in FIG. 5B is an example of the traveling information of the mobile robot 100. (b) represented in FIG. 5B is an example of the traveling information of the mobile robot 300.

As illustrated in (a) of FIG. 5B, the traveling information, for example, includes items of robot identification information (ID), a time stamp (TIME), a name (ENVIRONMENT) of an environment in which the mobile robot is currently traveling, a name (MAP) of a map that is currently used for movement, robot outline information (OUTLINE INFORMATION) including a width, a depth, a height, and the like, a current traveling path, a current translation speed, a current rotation speed, a current translational acceleration, a current rotational acceleration, a self-position estimation result (self-localization result; SELF-POSITION), a traveling priority level (PRIORITY LEVEL) in the traveling environment, and the like.

The robot identification ID includes information used for identifying a mobile robot. The robot identification ID may be simply a manufacturing number, a combination of a model name and a unique identification number, or identification information that is unique to each mobile robot. Traveling priority levels inside the environment are respectively assigned to robots and may have no duplicates. In addition, traveling priority levels inside the environment may be changed during traveling unless duplication occurs.

The time stamp includes data representing an elapsed time after start of movement along the path.

The name of the environment in which the robot is currently traveling includes information that can be used for identifying positions set as a path. For example, the name of the environment includes data such as identification information of a passage.

In a case in which the environment is divided into a plurality of areas, the name of the map that is currently used for movement includes identification information of a map for identifying the map corresponding to each area and the like.

The robot outline information includes information such as a width, a depth, a height, and the like identifying a shape of each mobile robot. For example, the robot outline information may be an approximation into a rectangular parallelepiped including an external shape of a mobile robot.

The current traveling path includes identification information of a traveling path identifying a selected traveling path.

The current translation speed, the current rotation speed, the current translational acceleration, and the current rotational acceleration respectively include data representing a translation speed, a rotation speed, a translational acceleration, and a rotational acceleration of each time. A time may be able to be identified using an elapsed time from start of movement in the path.

The self-position estimation result includes data of a result of estimation of a position identified by each mobile robot.

The traveling priority level in the traveling environment includes data identifying a priority level at the time of securing a traveling path. For example, as the traveling priority level, identification information assigned to mobile robots or the like that is data defined not to have duplication may be used.

In addition, the traveling information does not need to be managed and output using the data described above altogether but may be managed and output using divided data. The items of the data described above may be appropriately added or omitted.

Next, an example of a case defining the scheduled occupancy space information 1083 is illustrated in FIG. 5C. For example, the scheduled occupancy space information 1083 is defined on the basis of a set of robot outline information of which a position changes in accordance with movement of the mobile robot.

For example, a case in which the mobile robot 100 moves from a position RP1 to a position RP7 is illustrated in a plan view of FIG. 5C. A coordinate system of the plan view of this FIG. 5C includes an XX axis and a YY axis of a fixed coordinate system in the direction of a plane. Position information, path information, and the like of each point is managed as data of the fixed coordinate system described above.

The positions RP1 to RP7 are examples of points on a traveling path of the mobile robot 100. Arrows F1 to F7 extending from the positions RP1 to RP7 represent postures of the mobile robots 100 at the positions. In other words, the arrows F1 to F7 represent traveling directions of the mobile robot 100 at the positions. Rectangles arranged to include the positions RP1 to RP7 described above represent outline information OL1 to OL7 of the mobile robot 100 at respective positions.

In this way, the position of the mobile robot 100 is moved in accordance with elapse of time, and a locus thereof is settled and is handled as a scheduled occupancy space, whereby scheduled occupancy space information is generated. A shaded range inside the locus is a scheduled occupancy space represented by the scheduled occupancy space information.

The traveling path information 1084 includes information for identifying a traveling path. For example, a path joining the positions from RP1 to RP7 illustrated in FIG. 5C described above is a traveling path of the mobile robot 100. In the traveling path information 1084, information representing a start point (for example, the position RP1) and an end point (for example, the position RP7) of this path is included. In addition, in the traveling path information 1084, information representing a curvature of a path from the start point to the end point of the path is included.

The movement control value 1085 includes data for defining an amount of movement and a movement direction of a unit time at each point on the traveling path. For example, the movement control value may be defined as data for identifying a magnitude of a control command used for controlling each movement mechanism. More specifically, a translation speed, a rotation speed, a translational acceleration, a rotation acceleration, and the like of each time are defined.

The communication history information 1086 stores communication details transmitted or received by the communicator 103 as time history data.

The map information 1087 is information of a map of an analysis target range and is information that can be used for identifying a passage through which each mobile robot can pass.

### (Overview of process relating to movement control)

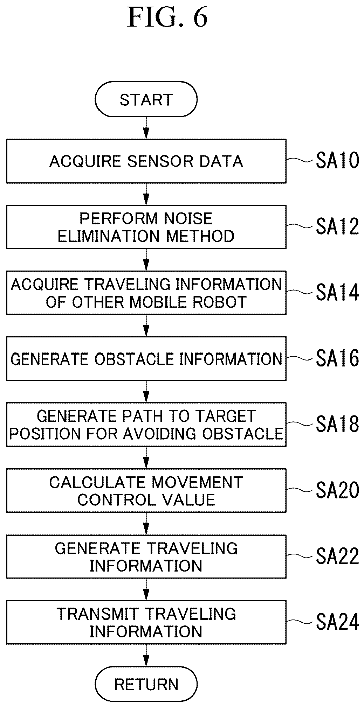

Next, movement control of the mobile robot 100 according to the embodiment will be described with reference to FIG. 6.

FIG. 6 is a flowchart of a process relating to movement control of the mobile robot 100 according to the embodiment. The flow of the process will be described with reference to the flowchart. The mobile robot 300 in the following description is an example of another mobile robot seen from the mobile robot 100.

First, the sensor controller 101 of the mobile robot 100 acquires observation data according to the sensor 120 by controlling the sensor 120 (Step SA10) and writes the observation data in the storage device 108 (observation data 1081), thereby enabling the observation data to be suppliable to the sensor observation data processor 102.

The sensor observation data processor 102 performs a noise reduction process for the acquired observation data (Step SA12) and stores a result thereof in the storage device 108 (observation data 1081), thereby enabling the observation data to be suppliable to the obstacle information generator 104.

The communicator 103 acquires traveling information of other mobile robots including the mobile robot 300 (Step SA14) and stores the traveling information in the storage device 108 (traveling information 1082), thereby enabling the traveling information to be suppliable to the obstacle information generator 104.

The obstacle information generator 104 generates obstacle information on the basis of the observation data (the observation data 1081) for which the noise reduction process has been performed and on the basis of the traveling information (the traveling information 1082) of other mobile robots acquired by the communicator 103 (Step SA16). The obstacle information generator 104 writes the obstacle information of each mobile robot into the storage device 108 (the scheduled occupancy space information 1083) such that the obstacle information can be supplied to the path generator 105.

The path generator 105 generates a traveling path (path) to a target position by using the obstacle information (the scheduled occupancy space information 1083) generated by the obstacle information generator 104 (Step SA18). The path generator 105 writes the traveling path information relating to the generated traveling path in the storage device 108 (the traveling path information 1084) such that the traveling path information can be supplied to the movement controller 106 and the traveling information generator 107.

The movement controller 106 calculates a movement control value on the basis of the traveling path (the traveling path information 1084) generated by the path generator 105 (Step SA20). The movement controller 106 writes the calculated movement control value in the storage device 108 (the movement control value 1085) such that the movement control value can be supplied to the traveling information generator 107.

The traveling information generator 107 generates traveling information of the mobile robot 100 including the traveling path (the traveling path information 1084) generated by the path generator 105 and the movement control value (the movement control value 1085) calculated by the movement controller 106 (Step SA22) and stores the generated traveling information in the storage device 108 (the traveling information 1082).

The communicator 103 transmits the traveling information (the traveling information 1082) generated by the traveling information generator 107 to the mobile robot 300 (Step SA24), and a series of processes end.

For each of the processes described above, more specific techniques will be described.

### (Management of obstacle information)

As a method of managing obstacle information, an appropriate technique among techniques described below may be used.

### (Management of scheduled occupancy space information using occupancy grid map)

The movement control system 1, for example, manages obstacle information of the inside of a movement space using occupancy grid map as map information. The occupancy grid map is an example of map information stored in the storage device 108.

In a management method using this occupancy grid map, by assigning costs having mutually-different values to a grid that is in an occupied state and a grid that is not in the occupied state, the state of each grid can be identified on the basis of a value of the cost assigned to each grid. For example, the obstacle information generator 104 assigns costs representing presence of objects to grids corresponding to positions of the objects detected by the sensor 120 using the data that has been processed by the sensor observation data processor 102 and output. In addition, the obstacle information generator 104 assigns a cost indicating the inside of a scheduled occupancy space to a grid corresponding to a position of the scheduled occupancy space in the traveling environment of the mobile robot 300.

From values of costs of the grids that have been assigned in this way, the obstacle information generator 104 enables presence/absence of an obstacle at the position of each grid on the occupancy grid map and an occupancy status of each grid to be identifiable.

In accordance with this, the obstacle information generator 104 can digitize information of presence/absence of an obstacle using the values of the costs that are determined in advance. At this time, a cost assigned to a grid indicating presence of an obstacle may be set to a relatively large value within a setting range, for example, 255, 254, or the like or may be set to a relatively small value within the setting range such as 0. The value of a cost for each situation of the position of a grid can be appropriately set.

### (Association between reference position and outline information)

As illustrated in FIG. 3 described above, positions detected by the sensor 120 form merely a part of a detection target. Thus, a representative point associated with a detected position is set as a reference position of the target object in advance. Outline information associating an outline of a target object with this reference position is defined for each target object. Here, for example, the target object is an object other than the mobile robot 100 including the mobile robot 300.

For example, the obstacle information generator 104 derives the representative point described above from point group information associated with the form of a target object detected by the sensor 120. In addition, by using the associated outline information described above, the obstacle information generator 104 assigns the outline information with reference to this representative point, thereby being able to reproduce the outline information of the target object at the position of the target object detected by the sensor 120.

### (Setting of scheduled occupancy space using outline information of target object)

The setting of a scheduled occupancy space using outline information of a target object will be described with reference to FIG. 5C.

FIG. 5C is a diagram illustrating setting of a scheduled occupancy space using outline information according to the embodiment.

The shape is approximated using the outline information of the target object. The outline information may be defined such that a form represented by the outline information includes a form of the target object. A difference between a form represented by the outline information and a form of an actual target object is a margin from a position that is in contact with the target object. By appropriately arranging this difference, the margin described above can be secured.

A cost of the reference position described above is set in advance. A cost of a grid located at the reference position may be propagated to a grid corresponding to the range of a form based on the outline information arranged with reference to this position.

For example, the obstacle information generator 104 propagates a cost of a grid located at the reference position to grids of a range based on the outline information of the mobile robot 100, thereby being able to define the costs described above to the grids relating to the range of the outline of the mobile robot 100.

In this way, desired costs are set to grids for the form based on the outline information. It can be regarded that a target object is present at the positions of grids to which this cost is set.

In addition, the obstacle information generator 104 moves the form based on the outline information of the target object in parallel in the traveling direction of the target object, whereby grids through which the target object passes during movement can be estimated. By repeating this parallel movement desired number of times, the obstacle information generator 104 can estimate an area of a band shape occupied when the target object moves. The obstacle information generator 104 may define an area acquired through estimation as a scheduled occupancy space. This scheduled occupancy space is acquired by estimating a range in which the target object becomes an obstacle. This may be used as the obstacle information.

For example, the mobile robot 100 is assumed to move with a determined amount of movement per unit time in the direction of movement. A range occupied within a predetermined period when the mobile robot 100 continues to move over the predetermined period can be generated by the mobile robot 100.

In addition, there is a method for deriving a scheduled occupancy space in place of this method.

There is a method of using a current traveling path and outline information of a target object when a scheduled occupancy space in the traveling environment of the target object is calculated from the traveling information of the target object. The traveling path represented as a set of coordinates in the environment, and thus, by using the outline information, a space occupied in a case in which a target object is present at such coordinates can be calculated.

In addition, there is a method of using a self-position estimation result and the outline information of the target object when a scheduled occupancy space in the traveling environment of the target object that has stopped is calculated.

The method of calculating a scheduled occupancy space is not limited to the methods described above. Any method other than those described above may be selected.

In addition, the obstacle information generator 104 may set a cost indicating presence of an object or occupancy to grids positioned in the range including a size represented by the outline information of the mobile robot 100. In such a case, values of costs may be assigned to grids distantly located from a reference grid to be distributed such that the cost decreases in accordance with the distance.

As above, although the management method for managing costs in the vicinity of the reference grid using the grid of the reference position and the cost of the position has been described, the method of managing obstacle information is not limited thereto.

### (Setting scheduled occupancy space of other mobile robot)

The obstacle information generator 104 may use a result of estimation based on information acquired from another mobile robot in setting a scheduled occupancy space of the other mobile robot. In such a case, the obstacle information generator 104 can suppress an amount of information acquired from the other mobile robot. In this way, communication can be efficiently performed.

For example, when the mobile robot 100 calculates a scheduled occupancy space in the traveling environment of the mobile robot 300, the obstacle information generator 104 may use the method using the current traveling path and the outline information of the mobile robot 300. In addition, when a scheduled occupancy space in the traveling environment of the mobile robot 300 that is stopping is calculated, the obstacle information generator 104 may use the method using the self-position estimation result and the outline information of the mobile robot 300. The method for calculating a scheduled occupancy space is not limited to those described above.

### (Setting of scheduled occupancy space using traveling priority level information)

When a scheduled occupancy space is calculated, the obstacle information generator 104 may prioritize registration of a scheduled occupancy space on the basis of a traveling priority level in the traveling environment.

In such a case, the obstacle information generator 104 may omit calculation of a scheduled occupancy space of other target objects on the basis of the traveling priority level. For example, when the traveling priority level of the mobile robot 100 is the highest, the obstacle information generator 104 can define a scheduled occupancy space first without deriving scheduled occupancy spaces of the other target objects and collating an interference status.

In addition, when the traveling priority level of the mobile robot 100 is not the highest, the obstacle information generator 104 may set scheduled occupancy spaces of other target objects of which traveling priority levels are higher than its own priority level as deriving targets.

The obstacle information generator 104 may perform switching between calculation/non-calculation of a scheduled occupancy space of the mobile robot 300 using the traveling priority levels like a case in which the obstacle information generator 104 compares the traveling priority level of the mobile robot 300 in the traveling environment with the traveling priority level of the mobile robot 100 in the traveling environment, calculates a scheduled occupancy space only in a case in which the traveling priority level of the mobile robot 300 is higher than that of the mobile robot 100, and register the scheduled occupancy space as an obstacle or the like.

In addition, when this scheduled occupancy space is calculated, by using a width and a depth of the outline information of the mobile robot 300, the obstacle information generator 104 can calculate a scheduled occupancy space projected onto a two-dimensional plane. Instead of this, by using a width, a depth, and a height of the outline information, the obstacle information generator 104 can calculate a scheduled occupancy space inside a three-dimensional space. Here, the depth of the outline information represents a size in a direction along the traveling direction. The width of the outline information represents a size in a direction orthogonal to the traveling direction. In determination of whether or not a passage can be used, at least information of the width of the outline information may be used.

In addition, when a scheduled occupancy space is calculated, all the coordinates of the traveling path do not need to be used, and the coordinates may be thinned out and used. Similarly, also the outline information may be approximated as a set of points having a predetermined interval and used.

As described above, a case in which the obstacle information generator 104 has an obstacle relating to movement of the mobile robot 100 includes any one of the following cases.
(1) Case in which there is an interference with an obstacle present in the first scheduled occupancy space for the mobile robot 100
(2) Case in which the first scheduled occupancy space for the mobile robot 100 and the second scheduled occupancy space for the mobile robot 300 interfere with each other, and the priority level of the mobile robot 100 for using the first scheduled occupancy space is lower than the priority level of the mobile robot 300 for using the second scheduled occupancy space

The obstacle information generator 104 may generate obstacle information used for identifying a case in which there is an obstacle relating to movement of the mobile robot 100. In addition, the obstacle information generator 104 may identify an obstacle relating to movement of the mobile robot 100 on the basis of the position information of the obstacle and the outline information of the obstacle.

### (Generation of traveling path)

The path generator 105 generates a traveling path from a current self-position to a target position on the basis of the obstacle information output from the obstacle information generator 104. Examples of an algorithm used at the time of generating a traveling path include Dijkstra's algorithm, and an A^{∗} (A star) search algorithm, and the like, and the algorithm is not limited thereto. The algorism described above are for searching for a movement path of which a movement cost is low.

For example, in a case in which "obstacle information for identifying a case in which there is an obstacle relating to movement of the mobile robot 100" is generated by the obstacle information generator 104, the path generator 105 may generate first scheduled occupancy space information for the mobile robot 100 relating to the scheduled occupancy space such that the obstacle described above is avoided on the basis of the obstacle information.

In addition, in accordance with a determination result for using the width of the first scheduled occupancy space for the mobile robot 100 and the width of the second scheduled occupancy space for the mobile robot 300, the path generator 105 may generate first scheduled occupancy space information representing the first scheduled occupancy space such that both the first scheduled occupancy space described above and the second scheduled occupancy space described above are included inside the passage IL1. In other words, in a case in which a sum value acquired by adding the width of the first scheduled occupancy space for the mobile robot 100 and the width of the second scheduled occupancy space for the mobile robot 300 is smaller than the value of the width of an area that can be used for movement inside the passage IL1, the path generator 105 may set the first scheduled occupancy space such that both the first scheduled occupancy space described above and the second scheduled occupancy space described above are included inside the passage IL1.

### (Movement control of mobile robot)

The movement controller 106 controls movement of the mobile robot 100 using the traveling path output from the path generator 105 and the obstacle information generated by the obstacle information generator 104. Examples of a method for calculating a value of movement control include a dynamic window approach, an elastic band method, and the like, but the method is not limited thereto. In addition, in addition to the movement control, the movement controller 106 may perform update the current self-position information of the mobile robot 100. The movement controller 106 may perform control other than these.

For example, the movement controller 106 controls movement of the mobile robot 100 using a desired scheduled occupancy space (the first scheduled occupancy space). However, in a case in which there is obstacle information relating to this, the movement controller 106 performs control such that movement of the mobile robot 100 using the desired scheduled occupancy space (the first scheduled occupancy space) described above is interrupted.

In addition, each of the sensor observation data processor 102, the obstacle information generator 104, the path generator 105, the movement controller 106, and the traveling information generator 107 may accompany the sensor controller 101. In a case in which each of the units described above is separated from the sensor controller 101, as a method for communication therebetween, a generally known method may be used.

### (Application example)

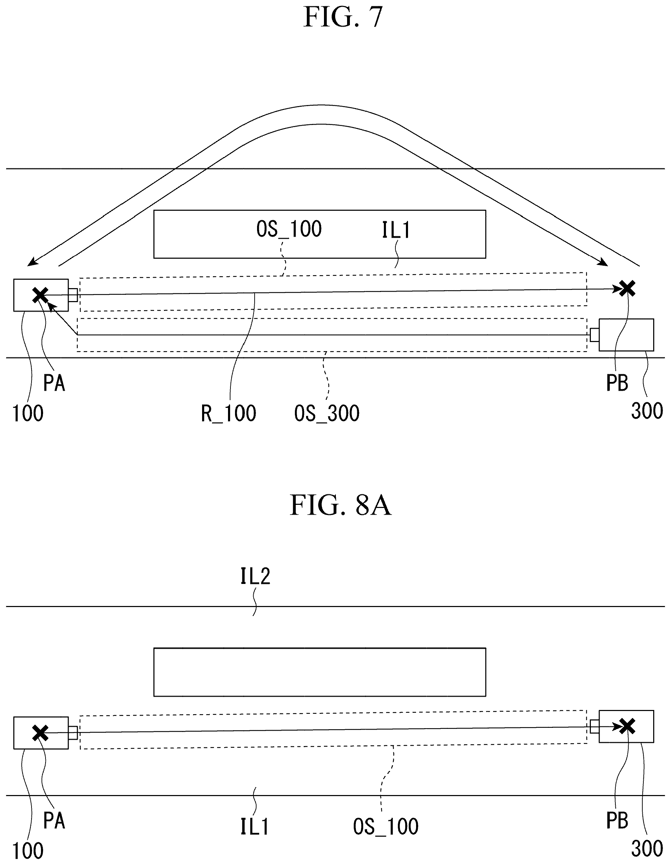

As a first application example, adjustment of a scheduled occupancy space using communication between mobile robots will be described with reference to FIGS. 7 to 8B. FIGS. 7 to 8B are diagrams illustrating adjustment of a scheduled occupancy space using communication between mobile robots according to the embodiment.

In a situation of the example illustrated in FIG. 7, similar to the example illustrated in FIG. 1B described above, the mobile robot 100 and the mobile robot 300 reach positions having the passage IL1 interposed therebetween. The mobile robot 100 is in a stage of moving from a point PA to a point PB, and the mobile robot 300 is in a stage of moving from the point PB to the point PA.

A case in which the mobile robot 300 does not detour to a passage IL2 but moves using a passage 1L1, which is different from the example illustrated in FIG. 1B described above has been described.

When the mobile robot 100 and the mobile robot 300 can communicate with each other from the positions having the passage IL1 interposed therebetween illustrated in FIG. 7, a scheduled occupancy space OS_100 to be used by the mobile robot 100 for movement thereof and a scheduled occupancy space OS_300 to be used by the mobile robot 300 for movement thereof can be adjusted such that the spaces do not interfere with each other.

As illustrated in FIG. 8A, in a case in which the mobile robot 100 determines the scheduled occupancy space OS_100 first, by acquiring information of the scheduled occupancy space OS_100, the mobile robot 300 can try to secure the scheduled occupancy space OS 300 to avoid the scheduled occupancy space OS_100.

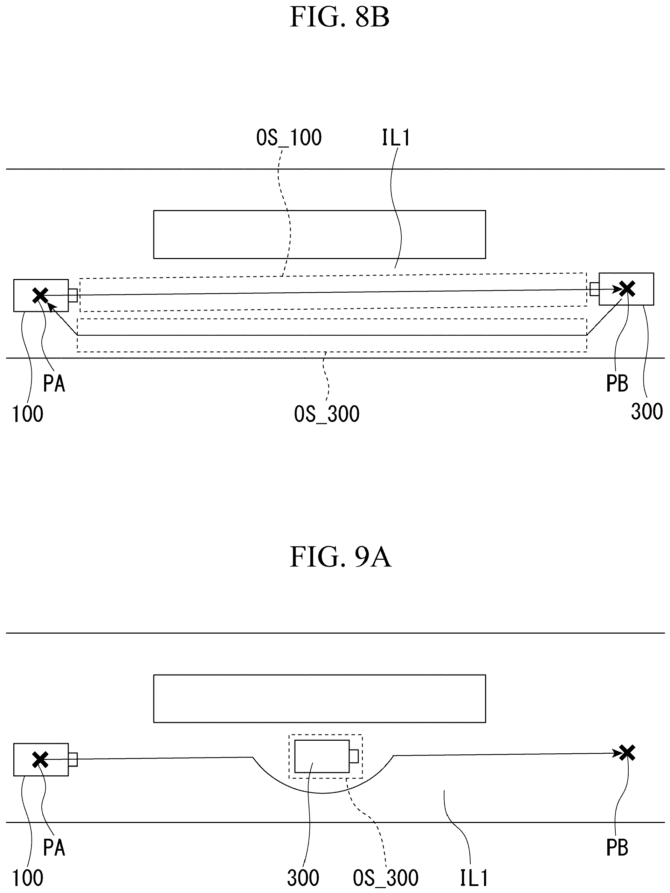

As illustrated in FIG. 8B, the mobile robot 300 extracts the scheduled occupancy space OS_300 running in parallel with the scheduled occupancy space OS_100 from the passage IL1. The mobile robot 300 can move using this scheduled occupancy space OS_300.

As a second application example, a case in which an obstacle present inside a passage is avoided according to the embodiment will be described with reference to FIG. 9A. FIG. 9A is a diagram illustrating a case in which an obstacle present inside a passage is avoided according to an embodiment.

As illustrated in FIG. 9A, the mobile robot 300 is stopping inside the passage IL1. The mobile robot 300 transmits traveling information indicating that the mobile robot is during stopping. The traveling information indicating being during stopping, for example, represents that at least the current translation speed is 0 and may include the position information of the self-position estimation result and the robot outline information. In addition, as the traveling information, all the current translational acceleration, the current rotation speed, and the current rotation acceleration being 0 may be included.

The mobile robot 100 that has received such traveling information can acquire information for identifying a position and a size of the scheduled occupancy space OS_300 to be occupied by the mobile robot 300 stopping inside the passage IL1. The mobile robot 100 sets the movement path such that this scheduled occupancy space OS_300 is avoided and moves along the set movement path. The movement path of the mobile robot 100 illustrated in FIG. 9A is an example of a movement path for avoiding the mobile robot 300 that is stopping.

In the case described above, in accordance with presence of the obstacle information, the path generator 105 may generate scheduled occupancy space information (first scheduled occupancy space information) relating to a scheduled occupancy space for the mobile robot 100 representing another scheduled occupancy space (a third scheduled occupancy space) avoiding an interference with the scheduled occupancy space OS_300 (the second scheduled occupancy space) occupied by the mobile robot 300 or the obstacle described above.

Then, the movement controller 106 may perform control such that the mobile robot 100 is caused to move using the scheduled occupancy space (the third scheduled occupancy space) described above.

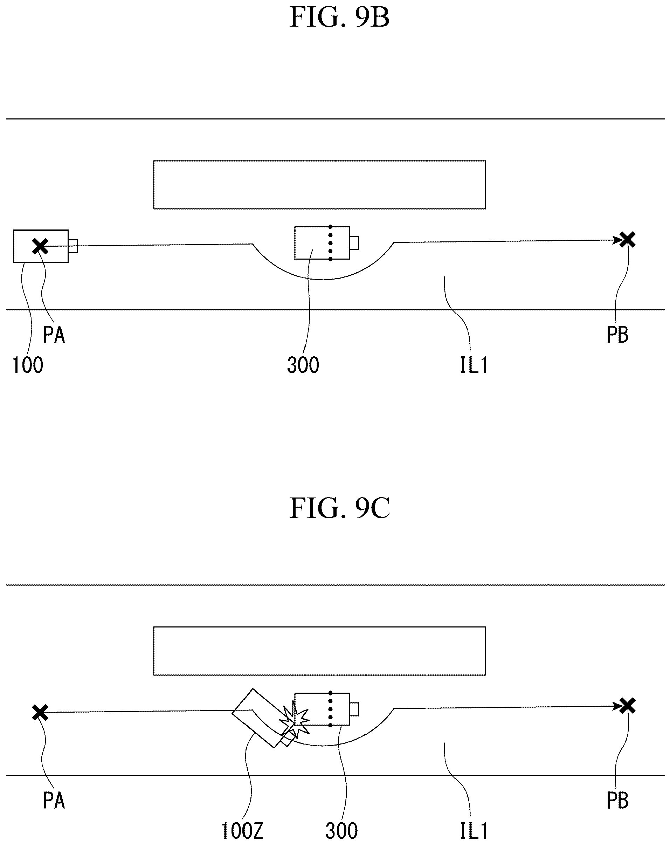

As a third application example, a case in which an obstacle present inside a passage is avoided according to the embodiment will be described with reference to FIGS. 9B and 9C. FIGS. 9B and 9C are diagrams illustrating cases in which an obstacle present inside a passage is avoided according to the embodiment.

As illustrated in FIG. 9B, the mobile robot 300 is stopping inside the passage IL1. For example, this mobile robot 300 is in a situation in which traveling information indicating being stopping cannot be transmitted or information required for analyzing the position cannot be transmitted. This point is different from the second application example.

In the case of this case, the mobile robot 100 cannot acquire information for identifying the position and the size of the scheduled occupancy space OS_300 occupied by the mobile robot 300 stopping inside the passage IL1. For this reason, the mobile robot 100 cannot set a path for avoiding the mobile robot 300 stopping inside the passage IL1 in a path setting step. For example, a path having a linear shape as illustrated in FIG. 8B is set in the path setting step. The mobile robot 100 starts to move inside the passage IL1 using path information representing the path having the linear shape. During movement, the sensor 120 detects an approach to the mobile robot 300. In accordance with this, the mobile robot 100 sets a path for avoiding the mobile robot 300 again and continues to move inside the passage IL1.

In addition, if the outline information of the mobile robot 300 can be used when the path is set at the time of this detour, the accuracy of estimation of the position of the mobile robot 300 can be raised. If the outline information of the mobile robot 300 cannot be used by the mobile robot 100 for setting a detour path, a separation gap from the mobile robot 100 to the mobile robot 300 may be sufficiently secured.

For example, as illustrated in FIG. 3, in a case in which an undetected area is formed due to the shape of the mobile robot 300, an allowed approach limit may be defined such that both the robots do not approach each other too closely like in the comparative example illustrated in FIG. 9C.

According to the embodiment described above, the processing device 110 of the mobile robot 100 includes the path generator 105 and the movement controller 106. The path generator 105 sets a scheduled occupancy space OS_100 (the first scheduled occupancy space) required when the mobile robot 100 moves along a planned movement path of the mobile robot for one area inside an area represented by map information using the map information enabling a planned movement path of the mobile robot 100 (the first mobile robot) to be set. The movement controller 106 performs control such that the mobile robot 100 is moved on the basis of the planned movement path of the mobile robot 100. The path generator 105 includes information of a scheduled occupancy space required when the mobile robot 300 (the second mobile robot) moves in conditions of setting the planned movement path of the mobile robot 100. In accordance with this, the mobile robot can be efficiently moved in accordance with situations of the inside of the passage IL1 including the planned movement path.

In more detail, the path generator 105 uses map information including one passage IL1 in which the planned movement path of the mobile robot 100 (the first mobile robot) can be set between a point PA (the first position) and a point PB (the second position). The path generator 105 sets a scheduled occupancy space OS_100 (the first scheduled occupancy space) to be used when the mobile robot 100 is moved for generating the planned movement path of the mobile robot inside the passage IL1. The movement controller 106 performs control such that the mobile robot 100 is moved using the planned movement path of the scheduled occupancy space OS_100 (the first scheduled occupancy space). At that time, the path generator 105 shares information of a scheduled occupancy space generated by the mobile robot 300 (the second mobile robot) and includes the shared information of the scheduled occupancy space in conditions for setting a planned movement path of the mobile robot 100 (the first mobile robot).

In addition, the path generator 105 sets a scheduled occupancy space OS_100 (the first scheduled occupancy space) on the basis of the planned movement path of the mobile robot 100 (the first mobile robot). For example, the path generator 105 may set the scheduled occupancy space OS_100 (the first scheduled occupancy space) using the information of the planned movement path of the mobile robot 100 (the first mobile robot) and the outline information of the mobile robot 100.

In addition, in a case in which a scheduled occupancy space OS_300 (the second scheduled occupancy space) generated by the mobile robot 300 (the second mobile robot) is present inside the passage IL1, the scheduled occupancy space OS_100 (the first scheduled occupancy space) and the scheduled occupancy space OS_300 (the second scheduled occupancy space) interfere with each other, and the priority level of the mobile robot 100 for use of the scheduled occupancy space OS_100 (the first scheduled occupancy space) is higher than the priority level of the mobile robot 300 for use of the scheduled occupancy space OS_300 (the second scheduled occupancy space), the movement controller 106 may perform control such that the mobile robot 100 is moved using the scheduled occupancy space OS_100 (the first scheduled occupancy space).

In addition, the sensor observation data processor 102 of the processing device 110 generates observation data on the basis of a detection result acquired by the sensor 120. The communicator 103 may acquire movement information relating to the mobile robot 300 (the second mobile robot) relating to the second scheduled occupancy space.

The mobile robot 100 includes the sensor 120 and thus can measure a surrounding environment. The mobile robot 100 performs self-position estimation from the map information of the surrounding environment generated in advance and the measurement result acquired by the sensor 120 and performs autonomous movement. In addition, the mobile robot 100 also identifies an object not represented in the map information as an obstacle on the basis of the measurement result acquired by the sensor 120 and travels while avoiding the object.

When the number of mobile robots traveling under a relating environment increases, in accordance with this, a chance for detecting/approaching other mobile robots during autonomous movement increases as well. As described above, in a case in which mobile robots approach each other, the movement control system 1 enables a relating passage to be efficiently usable and thus can efficiently move the mobile robots.

By reflecting traveling information of other mobile robots such as the path information, the self-position estimation result, the outline, and the like, the mobile robot generates a path in the passage IL1 with actual scheduled occupancy spaces of the other mobile robots added to the conditions. In accordance with this, even when a chance for a plurality of mobile robots to travel through a passage increases, the conveyance efficiency is expected to be improved. In addition, by using the movement control system 1 when the self-position estimation results and the outlines of other mobile robots that are stopping are used in generation of a path, objects that are stopping can be correctly recognized as obstacles as well.

Here, a typical example relating to handling of approach of two mobile robots will be described using scheduled occupancy spaces and priority levels relating to the settings.

For example, a case in which a mobile robot 100 and a mobile robot 300 travel in the same path in the same direction will be assumed. The mobile robot 300 is a preceding vehicle, the mobile robot 100 follows this mobile robot 300. In a case in which the speed of the mobile robot 100 is lower than the speed of the mobile robot 300, a situation in which the mobile robot 100 catches up with the mobile robot 300 occurs.

In such a case, Condition A: in a case in which the priority level of the preceding mobile robot 300 is higher than that of the mobile robot 100, the movement of the mobile robot 300 is prioritized. More specifically, a scheduled occupancy space of the mobile robot 300 that is generated by the mobile robot 300 is set in the traveling direction of the mobile robot 300. The mobile robot 300 can continue the movement using the planned movement path. At this time, for the mobile robot 100 having a low priority level, securement of a scheduled occupancy space is restricted.

(A1) The mobile robot 100 follows the mobile robot 300 with a state of being close to the mobile robot 300 to a range of not approaching the mobile robot 300 too much maintained.

For example, a scheduled occupancy space to be generated by the mobile robot 100 is restricted due to presence of the scheduled occupancy space of the mobile robot 300. By moving using the scheduled occupancy space generated by the mobile robot 100, the mobile robot 100 can follow the mobile robot 300.

(A2) In a case in which a speed difference between the mobile robot 100 and the mobile robot 300 is larger than a predetermined value, the mobile robot 100 may reset a movement path such that it overtakes the mobile robot 300 and move using the movement path that has been newly set.

In contrast to this, Condition B: In a case in which the priority of the preceding mobile robot 300 is lower than that of the mobile robot 100, the movement of the mobile robot 100 is prioritized. At this time, the following events may occur.

(B1) There are cases in which, in accordance with an approach of the mobile robot 100 to the mobile robot 300, each of the outline range of a position at which the mobile robot 300 is present and a planned movement path from the current position of the mobile robot 300 is included in a scheduled occupancy space of the mobile robot 100. In such cases, the scheduled occupancy space of the mobile robot 100 is set first from the relation of priority levels. Even when the mobile robot 300 tries to generate a scheduled occupancy space thereof, the scheduled occupancy space interferes with the scheduled occupancy space of the mobile robot 100, and thus the mobile robot 300 cannot set a scheduled occupancy space required for movement. As a result, since the scheduled occupancy space could not be secured, the mobile robot 300 temporarily stops at the position and waits until the scheduled occupancy space can be secured.

When the situation described occurs, the stopped mobile robot 300 is present inside the scheduled occupancy space of the mobile robot 100. In this case, the mobile robot 100 moves using the planned movement path. In a case in which the sensor 120 of the mobile robot 100 has detected the mobile robot 300 during stopping, the mobile robot 100 may reset a new movement path avoiding the mobile robot 300 and continue the movement using the method described above. In accordance with this, the mobile robot 100 can overtake the mobile robot 300.

In this step, the position of the mobile robot 300 becomes outside the range of the scheduled occupancy space of the mobile robot 100. The mobile robot 300 tries to set a scheduled occupancy space for movement using the movement path that has been used until temporary stopping. In a range in which the mobile robot 300 could generate the scheduled occupancy space, the mobile robot 300 resumes movement.

(B2) According to the algorithm of "(B1)" described above, although the mobile robot 300 that has been caught up with the mobile robot 100 temporality stops, and the mobile robot 100 takes an avoiding action, a predetermined rule may be set in advance such that the mobile robot 300 takes an avoiding action of avoiding the scheduled occupancy space of the mobile robot 100. For example, the mobile robot 300 that is a preceding vehicle moves to the left side toward the direction of the movement path and takes an avoiding action for deviating from the scheduled occupancy space of the mobile robot 100. In accordance with this, an obstacle inside the scheduled occupancy space of the mobile robot 100 disappears, and thus, the mobile robot 100 can continue to move more quickly.

The mobile robot 300 may reset a new movement path from the moved position through avoidance or may return to the position before taking the avoiding action and continue to move using the initial movement path.

By causing each of all the mobile robots to perform any one of the methods described above, each mobile robot can autonomously move.

### (Second embodiment)

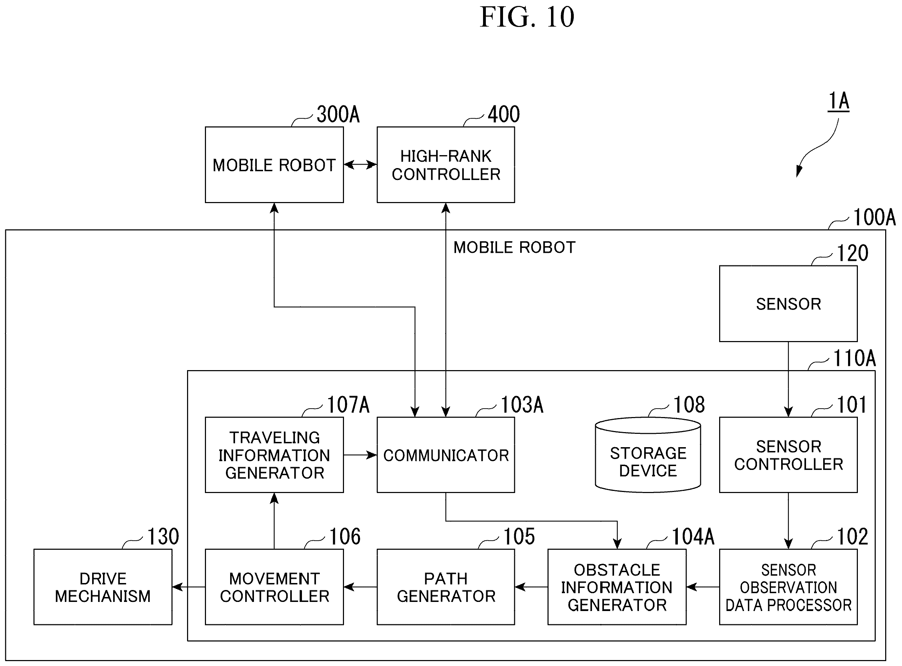

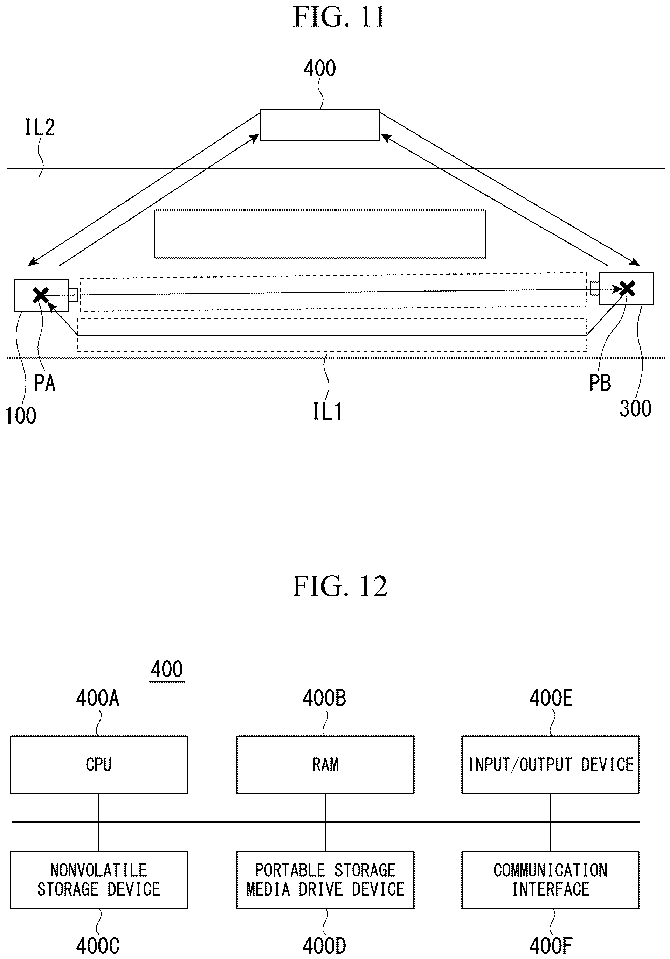

A second embodiment will be described with reference to FIGS. 10 and 11.

In this second embodiment, a case in which a controller 400 manages movement control of a mobile robot 100A and a mobile robot 300A will be described.

FIG. 10 is a configuration diagram of a movement control system 1A according to the second embodiment.

The movement control system 1A includes the mobile robot 100A, the mobile robot 300A, and the controller 400.

The mobile robot 100A corresponds to the mobile robot 100 of the movement control system 1. The mobile robot 100A is configured to be able to communicate with the controller 400, which is different from the mobile robot 100.

The mobile robot 300A corresponds to the mobile robot 300 of the movement control system 1. The mobile robot 300A is configured to be able to communicate with the controller 400, which is different from the mobile robot 300.

The controller 400 manages the mobile robot 100A, the mobile robot 300A, and other devices and the like in the environment.

Next, details of the mobile robot 100A will be described with differences from the mobile robot 100 being focused. The following description can be applied also to the mobile robot 300A.

The mobile robot 100A includes a processing device 110A in place of the processing device 110 of the mobile robot 100.

The processing device 110A will be described.

The processing device 110A includes a communicator 103A, an obstacle information generator 104A, and a traveling information generator 107A in place of the communicator 103, the obstacle information generator 104, and the traveling information generator 107 of the processing device 110.

The communicator 103A transmits traveling information of the mobile robot 100A generated by the traveling information generator 107A to the mobile robot 300A and the controller 400 and receives traveling information of the mobile robot 300A and traveling information from the controller 400.

The obstacle information generator 104A acquires traveling information from the controller 400 and performs a process on this traveling information in addition to the process of the obstacle information generator 104.

The traveling information generator 107A performs a process for transmitting traveling information to the controller 400 in addition to the process of the traveling information generator 107.

FIG. 11 is a diagram illustrating adjustment of a scheduled occupancy space using communication according to the second embodiment.

Each of the mobile robot 100A and the mobile robot 300A communicates with the controller 400. The mobile robot 100A notifies the controller 400 of traveling information of the mobile robot 100A. The mobile robot 300A notifies the controller 400 of traveling information of the mobile robot 300A.

The controller 400 notifies the mobile robot 100A of the traveling information of the mobile robot 300A and an in-environment traveling priority level of the mobile robot 100A. The controller 400 notifies the mobile robot 300A of the traveling information of the mobile robot 100A and an in-environment traveling priority level of the mobile robot 300A. In this way, the mobile robot 100A and the mobile robot 300A acquires the in-environment traveling priority levels notified from the controller 400.

For example, it is assumed that the in-environment traveling priority level of the mobile robot 100A is the highest, and the in-environment traveling priority level of the mobile robot 300A is second highest. In this case, since the in-environment traveling priority level is the highest, the processing device 110 of the mobile robot 100A performs an occupancy space setting process without using a situation of an occupancy space set to a passage IL1 as a condition. The processing device 110 moves to the position PB using the occupancy space set here.

In addition, since the in-environment traveling priority level is 2, the processing device 310 of the mobile robot 300A performs an occupancy space setting process thereof by avoiding an occupancy space set in advance by the processing device 110 of the mobile robot 100A of which the in-environment traveling priority level is the highest. The processing device 310 moves to the position PA using the occupancy space set here.

As described above, occupancy spaces can be assigned in order of the highest to lowest priority level through relatively simple and easy priority control, and in accordance with this, each mobile robot can efficiently move.

Next, the controller 400 will be described with reference to FIG. 12.

FIG. 12 is a diagram illustrating an example of a hardware configuration of the controller 400 according to the embodiment. The controller 400, for example, includes a CPU 400A, a random access memory (RAM) 400B, a nonvolatile storage device 400C, a portable storage media drive device 400D, an input/output device 400E, and a communication interface 400F. The controller 400 may include an arbitrary processor such as a GPU in place of the CPU 400A. Some of the constituent elements illustrated in FIG. 14 may be omitted.

By expanding a program stored in the nonvolatile storage device 400C or a program stored in a portable storage medium loaded into the portable storage media drive device 400D into the RAM 400B and executing the expanded program, the CPU 400A performs various processes described below. The RAM 400B is used as a working area by the CPU 400A. The nonvolatile storage device 400C, for example, is an HDD, a flash memory, a ROM, or the like. In the portable storage media drive device 400D, a portable storage medium such as a DVD, a compact disc (CD), an SD (registered trademark), or a card is loaded. The input/output device 400E, for example, includes a keyboard, a mouse, a touch panel, a display device, and the like. The communication interface 400F functions as an interface in a case in which the controller 400 communicates with other devices such as the mobile robot 100B and the like.

For example, at least some of functional units realized by the controller 400 are realized by a hardware processor such as the CPU 400A or a GPU executing a program (software) stored in the nonvolatile storage device 400C or the like. In addition, some or all of the functional units of the controller 400 may be realized by hardware (a circuit unit; circuitry) such as an LSI, an ASIC, or an FPGA or may be realized by software and hardware in cooperation. The controller 400 is one example of a computer.

Referring back to FIG. 10, movement control will be described. The mobile robot 100A of the movement control system 1A, differently from the mobile robot 100, moves using a result of an analysis process performed by the CPU 400A of the external controller 400.

For example, the sensor controller 101 of the processing device 110A acquires detection distance information generated by the sensor 120 and outputs the acquired detection distance information to the CPU 400A of the controller 400 through the communicator 103.

The CPU 400A of the controller 400 acquires observation data detected by the sensor 120 from the processing device 110A through the communication interface 400F, performs an analysis process for the observation data detected by the sensor 120, and outputs a result of the analysis process. Details thereof are as in the embodiment described above.

The movement controller 106 of the processing device 110A acquires traveling information including a movement target and the like from the CPU 400A of the controller 400 through the communicator 103 as a result of the analysis process and drives the movement mechanism 130 to a position represented by the movement target.

The movement control system 1A may perform the process illustrated in FIG. 6 described above.

According to the movement control system 1A of the embodiment described above, the CPU 400A is configured as a part of the controller 400 that is a body separate from the mobile robot 100A. This point is different from the movement control system 1 according to the first embodiment, and the movement control system 1A acquires effects similar to those of the movement control system 1.

For example, as illustrated in FIG. 7 described above, the mobile robot 100A and the mobile robot 300A can directly communicate with each other. In addition, in the communication form illustrated in FIG. 11, the mobile robot 100A and the mobile robot 300A can indirectly communicate with each other through the controller 400.

In addition, the controller 400 acquires traveling information of the mobile robot 100A, the mobile robot 300A, and other mobile robots and manages movement situations thereof. For the management thereof, the controller 400 transmits traveling information of other mobile robots relating to the situation of each mobile robot to each mobile robot. In addition, the controller 400 may additionally generate traveling information having information as below as traveling information of a device in the environment and transmit the generated traveling information to a managing mobile robot. At that time, the traveling information may be the same as the traveling information described above (FIG. 5).

### (Information management using controller 400)

For example, at the time of receiving traveling information of each mobile robot and at the time of transmitting traveling information to each mobile robot, the controller 400 updates information as below included in the controller 400.
(1) Environment information of an environment in which mobile robots such as the mobile robot 100A and the mobile robot 300A are moving
(2) Traveling situation of each mobile robot managed by the controller 400
(3) Operating situation of devices managed by the controller 400

In addition, the information included in the controller 400 and the generated information are not limited to those described above, and information other than the information described above may be included and generated. By appropriately updating the information described above, the controller 400 may use information representing latest situations.

By performing the information management, the controller 400, for example, may set a traveling priority level of each mobile robot. In accordance with this, the controller 400 can control movement of each mobile robot more efficiently.

In addition, functions included in the controller 400 are not limited to those described above, and any other function may be included. Hereinafter, a case in which a traveling priority level is set will be described in detail.

### (Traveling priority level setting using controller 400)

The controller 400 may have a function of setting traveling priority levels of the mobile robot 100A, the mobile robot 300A, and in-environment devices in the traveling environment. The controller 400 sets a traveling priority level of each mobile robot in accordance with a predetermined rule, which is set in advance, relating to determination of traveling priority levels. When the traveling priority levels are set, the controller 400 may set traveling priority levels in place of the traveling priority levels set in advance in accordance with a predetermined rule. The predetermined rule described above may be appropriately set.

### (Traveling priority level process using mobile robot 100A)

The mobile robot 100A performs movement control according to traveling priority levels set by the controller 400. The process of each process relating to this will be orderly described.

The communicator 103A will be described.

The communicator 103A transmits traveling information of the mobile robot 100A that is generated by the traveling information generator 107A to the mobile robot 300A and the controller 400. In addition, the communicator 103A receives the traveling information from the mobile robot 300A or receives the traveling information from the controller 400 and writes the received traveling information into the storage device 108. As a method for communication between the mobile robot 300A and the controller 400, a generally-known method may be used.

The obstacle information generator 104A will be described,

The obstacle information generator 104A calculates a scheduled occupancy space in the traveling environment of the mobile robot 300A based on the traveling information of the mobile robot 300A that has been received by the communicator 103A in addition to the obstacle information generator 104 described above. In addition, the obstacle information generator 104A calculates a scheduled occupancy space based on the traveling information received from the controller 400. The obstacle information generator 104A registers obstacle information for handling each calculated scheduled occupancy space as an obstacle in the storage device 108.

In this way, using information of a scheduled occupancy space based on the traveling information received from the controller 400 is added to the function of the obstacle information generator 104A. In addition, the method described above may be applied to the obstacle information management method and the method of using the information relating to a scheduled occupancy space.

The obstacle information generator 104A updates information of scheduled occupancy spaces using the traveling information based on the traveling priority levels determined by the controller 400. In accordance with this, the mobile robot 100A performs the traveling priority level process according to a traveling priority level determined by the controller 400.

### (Traveling priority level process using mobile robot 300A)

The mobile robot 300A will be described.

The mobile robot 300A can communicate with the controller 400, which is different from the mobile robot 300 described above. The mobile robot 300A controls movement thereof on the basis of the traveling information of the mobile robot 100A acquired through communication with the communicator 103A and the traveling information received from the controller 400.

For example, in the control of movement using the mobile robot 300A, control similar to the control of the mobile robot 100A performed at the time of receiving traveling information is performed. More specifically, in the control of movement using the mobile robot 300A, using information of a scheduled occupancy space based on traveling information received from the controller 400 is added.

In accordance with this, similar to the mobile robot 100A, the mobile robot 300A performs a traveling priority level process according to a traveling priority level determined by the controller 400.

According to the embodiment described above, the movement control system 1A includes the mobile robot 100, the mobile robot 300, and the controller 400. The controller 400 communicates with each of the processing device 110 of the mobile robot 100 and the processing device 310 of the mobile robot 300. The controller 400 transmits traveling information relating to the use of the passage IL1 to each of the processing device 110 of the mobile robot 100 and the processing device 310 of the mobile robot 300. In accordance with this, the movement control system 1A can efficiently move each mobile robot in accordance with the situation of the inside of the passage IL1 including a planned movement path.

In addition, the controller 400 notifies the mobile robot 100 of the traveling information of the mobile robot 300 and notifies the mobile robot 300 of the traveling information of the mobile robot 100. In accordance with this, the controller can transmit traveling information relating to the use of the passage IL1 to the mobile robot 100 and the mobile robot 300.

### (Third embodiment)

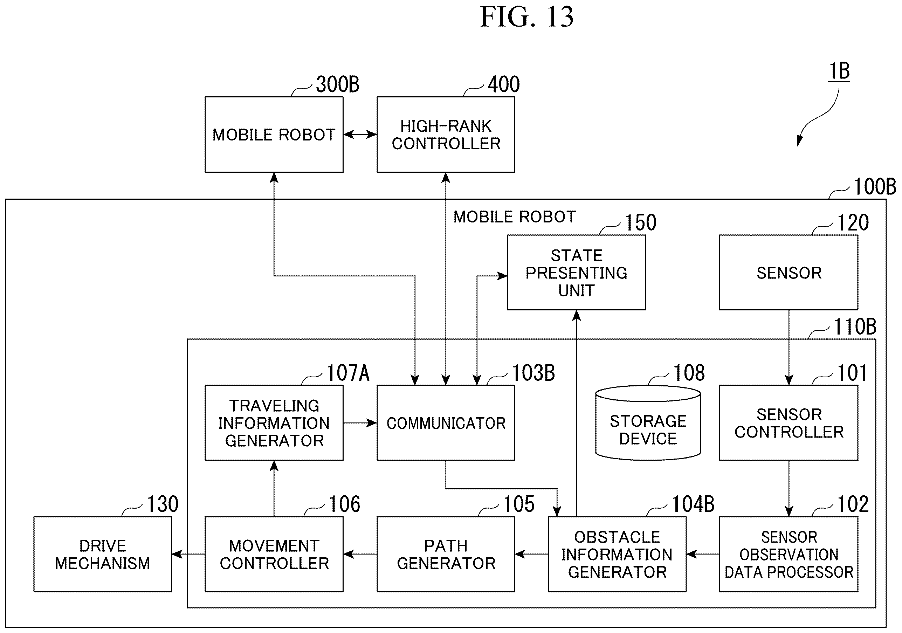

A third embodiment will be described with reference to FIG. 13.

In this third embodiment, a case in which traveling information is output to a state presenting unit 150 will be described.

FIG. 13 is a configuration diagram of a movement control system 1B according to the third embodiment.

The movement control system 1B includes a mobile robot 100B, a mobile robot 300B, and a controller 400.

The mobile robot 100B corresponds to the mobile robot 100A of the movement control system 1A. In the mobile robot 100B, the state presenting unit 150 is added, which is a main difference from the mobile robot 100A.

The mobile robot 300B corresponds to the mobile robot 300A of the movement control system 1A. Similar to the mobile robot 100B, in the mobile robot 300B, a state presenting unit 150 is added, which is main difference from the mobile robot 300A.

Next, details of the mobile robot 100B will be described with differences from the mobile robot 100A being focused. The following description can be applied also to the mobile robot 300B.

The mobile robot 100B includes a processing device 110B in place of the processing device 110A of the mobile robot 100A. The processing device 110B includes a communicator 103B and an obstacle information generator 104B in place of the communicator 103A and the obstacle information generator 104A of the processing device 110A and further includes a state presenting unit 150.

The state presenting unit 150 is configured to include an output device, for example, such as a display or a speaker. The state presenting unit 150 is arranged at a position not blocking measurement of a surrounding environment of the sensor 120 inside a vehicle main body 10. A position at which the state presenting unit 150 is arranged in the vehicle main body 10 may be on any one of the front side, the rear side, and left/right side faces of the mobile robot 100.

The communicator 103B performs a process of supplying transmitted and received traveling information to the state presenting unit 150 in addition to the communication process of the communicator 103A.

A process relating to the generation of obstacle information using the obstacle information generator 104B may be similar to the process of the obstacle information generator 104A described above. The obstacle information generator 104B causes the state presenting unit 150 to output the generated obstacle information.

The state presenting unit 150 outputs an image, a video, an audio, and the like in accordance with a type of output device. The output method of the state presenting unit 150 is not limited to that described above, and a general method for outputting information may be applied.

According to the embodiment, the state presenting unit 150 acquires obstacle information generated by the obstacle information generator 104B and traveling information output from the communicator 103B and presents such information. In the information presented by the state presenting unit 150, in addition to information relating to detected obstacles, information relating to scheduled occupancy spaces of other mobile robots, information relating to a scheduled occupancy space of the mobile robot 100B, and the like may be included.

Other than that described above, the state presenting unit 150 may present information on the basis of the information stored in the storage device 108 of the mobile robot 100B. For example, in the information described above, information of a current self-position and the like may be included.

According to at least one of the embodiments described above, a processing device includes a path generator and a movement controller. The path generator described above, by using map information enabling a planned movement path of a first mobile robot to be set, sets a first scheduled occupancy space required when the first mobile robot moves in one area of the map information described above along a planned movement path of the mobile robot. The movement controller described above performs control such that the first mobile robot described above moves on the basis of the planned movement path of the first mobile robot described above. The path generator includes information of a scheduled occupancy space required when a second mobile robot moves in conditions for setting the planned movement path of the first mobile robot. In this way, the mobile robot can be efficiently moved according to the situations of the passage including the planned movement path.

While several embodiments of the present invention have been described, such embodiments are presented as examples and are not to be considered to limit the scope of the invention. These embodiments can be performed in various other forms, and various omissions and substitutions can be made in a range not departing from the concept of the invention. When included in the scope or the concept of the invention, these embodiments and modifications thereof belong to the scope of the invention defined in the claims and an equivalent scope thereof.

## Claims

1. A processing device comprising:
a path generator, by using map information enabling a planned movement path of a first mobile robot to be set, configured to set a first scheduled occupancy space required when the first mobile robot moves in one area of the map information along a planned movement path of the mobile robot; and
a movement controller configured to perform control such that the first mobile robot moves on the basis of the planned movement path of the first mobile robot;
wherein the path generator includes information of a scheduled occupancy space required when a second mobile robot moves in conditions for setting the planned movement path of the first mobile robot.

2. The processing device according to claim 1, wherein the path generator sets the first scheduled occupancy space on the basis of the planned movement path of the first mobile robot.

3. The processing device according to claim 1, wherein the path generator sets the first scheduled occupancy space using information of the planned movement path of the first mobile robot and outline information of the first mobile robot.

4. The processing device according to claim 1, wherein, in a case in which a second scheduled occupancy space generated by the second mobile robot is present inside one passage including the planned movement path, the first scheduled occupancy space and the second scheduled occupancy space interfere with each other, and a priority level of the first mobile robot for using the first scheduled occupancy space is higher than a priority level of the second mobile robot for using the second scheduled occupancy space, the path generator generates first scheduled occupancy space information representing the first scheduled occupancy space.

5. The processing device according to claim 4, further comprising an obstacle information generator configured to generate obstacle information for identifying a case in which there is an obstacle relating to movement of the first mobile robot,
wherein the case in which there is an obstacle relating to movement of the first mobile robot includes one of a case of interfering with an obstacle present inside the first scheduled occupancy space and a case in which the first scheduled occupancy space and the second scheduled occupancy space interfere with each other, and the priority level of the first mobile robot for using the first scheduled occupancy space is lower than the priority level of the second mobile robot for using the second scheduled occupancy space, and
wherein the path generator generates the first scheduled occupancy space information of the first scheduled occupancy space such that the obstacle is avoided on the basis of the obstacle information.

6. The processing device according to claim 5, wherein the movement controller performs control such that movement of the first mobile robot using the first scheduled occupancy space is interrupted in accordance with presence of the obstacle information.

7. The processing device according to claim 5, wherein the path generator generates the first scheduled occupancy space information representing a third scheduled occupancy space for avoiding an interference with the second scheduled occupancy space or the obstacle in accordance with presence of the obstacle information.

8. The processing device according to claim 7, wherein the movement controller performs control such that the first mobile robot moves using the third scheduled occupancy space.

9. The processing device according to claim 4, wherein, in a case in which a sum value acquired by adding a width of the first scheduled occupancy space and a width of the second scheduled occupancy space is smaller than a value of a width of an area that is usable for movement inside the one passage, the path generator generates the first scheduled occupancy space information representing the first scheduled occupancy space such that both the first scheduled occupancy space and the second scheduled occupancy space are included inside the one passage.

10. The processing device according to claim 5, wherein the obstacle information generator identifies an obstacle relating to movement of the first mobile robot on the basis of position information of the obstacle and outline information of the obstacle.

11. A mobile robot comprising:
the processing device according to any one of claims 1 to 10;
a movement mechanism for the first mobile robot; and
a sensor configured to detect a situation of the vicinity of the first mobile robot;
wherein the processing device includes:
a sensor observation data processor configured to generate observation data on the basis of a detection result acquired by the sensor; and
a communicator configured to acquire movement information of the second mobile robot.

12. A movement control system comprising:
a first mobile robot including the processing device according to claim 1;
a second mobile robot; and
a controller configured to communicate with each of the first mobile robot and the second mobile robot,
wherein the controller transmits traveling information relating to a scheduled occupancy space required when the mobile robot moves to each of the first mobile robot and the second mobile robot.

13. A processing method using a computer, the processing method comprising:
by using map information enabling a planned movement path of a first mobile robot to be set, setting a first scheduled occupancy space required when the first mobile robot moves in one area of the map information along a planned movement path of the mobile robot;
performing control such that the first mobile robot moves on the basis of the planned movement path of the first mobile robot; and
setting a first scheduled occupancy space by sharing information of a scheduled occupancy space generated by a second mobile robot and including the shared information of the scheduled occupancy space in conditions for setting the planned movement path of the first mobile robot.

14. A program causing a computer to perform:
by using map information enabling a planned movement path of a first mobile robot to be set, setting a first scheduled occupancy space required when the first mobile robot moves in one area of the map information along a planned movement path of the mobile robot;
performing control such that the first mobile robot moves on the basis of the planned movement path of the first mobile robot; and
setting a first scheduled occupancy space by sharing information of a scheduled occupancy space generated by a second mobile robot and including the shared information of the scheduled occupancy space in conditions for setting the planned movement path of the first mobile robot.
